# EUROPEAN PATENT APPLICATION

(11) **EP 4 465 717 A1**
(43) Date of publication of application: **20.11.2024**
(21) Application number: 22917920.5
(22) Date of filing: 10.01.2022
(51) Int. Cl.: H04W 72/04

(54) **SIGNAL RECEIVING METHOD AND APPARATUS, AND SYSTEM**

(71) Applicant: FUJITSU LIMITED, Kawasaki-shi, Kanagawa 211-8588 (JP)
(72) Inventor: LU, Yang, Beijing 100022 (CN)
(74) Representative: Haseltine Lake Kempner LLP
(86) International application number: PCT/CN2022/071027
(87) International publication number: WO 2023/130449

(57) **Abstract**

Embodiments of this disclosure provide a signal reception method and apparatus and a system. The signal reception apparatus is applicable to a terminal equipment and includes: a first receiving unit configured to receive configuration information of a non-cell defining synchronization signal and physical broadcast channel block (NCD-SSB) of a serving cell transmitted by a network device; and a second receiving unit configured to receive the NCD-SSB of the serving cell transmitted by the network device.

## Description

### Technical Field

This disclosure relates to the field of communication technologies.

### Background

Realizing the Industrial Internet of Things is one of the important goals of the fifth generation (5G) mobile communication technology. In large-scale industrial wireless sensor network (IWSN) application scenarios, in addition to the need to apply some high-end capability terminal equipments, such as ultra-reliable low-latency communication (URLLC), more often than not, mid to low-end capability terminal equipments are needed only, including a temperature and humidity sensor, a pressure sensor, an accelerator, and a motion sensor, etc. In addition, in another 5G vertical industry application scenario smart city, widespread deployment of video surveillance cameras is an important application, wherein the surveillance cameras do not require the use of high-end capability terminal equipments. Furthermore, there are a large number of wearable devices, such as smartwatches, wristbands, wearable medical monitoring devices, which have lower requirements for processing capabilities of terminal equipments.

Performances of these equipments needing to be widely used are lower than those of Rel-15/Rel-16 terminal equipments, but higher than those of low-power wide-area (LPWA) equipments (such as NB-IoT and LTE-M), and basic features of these equipments include: lower complexity, compact structures, smaller device sizes, and battery lives lasting for over a year, in comparison with URLLC and enhanced mobile broadband (eMBB) equipments. However, existing Rel-15/16 5G systems are unable to effectively support terminal equipments with lower capabilities. Therefore, cost of 5G terminal equipments is generally high at present.

In order to support mid to low-end New Radio (NR) equipments and reduce cost of 5G terminal equipments, the Third Generation Partnership Project (3GPP) began researching reduced capability (RedCap) terminal equipments (hereinafter referred to as UEs) in Rel-17, aiming at clarifying features and capability parameters of reduced capability NR equipments relative to eMBB and URLLC NR equipments of Rel-16, and improving power-saving performances, battery lives and usage times of reduced capability NR equipments. The low complexity and lower processing capabilities of the reduced capability NR equipments are mainly reflected in the following aspects: the reduced number of transmitting and receiving antennas of the equipments, narrower transmission bandwidths, supporting half-duplex FDD only, longer data processing time, and reduced modulation and demodulation capabilities. Reduced capability UEs need to report capabilities to a network, so that the network applies appropriate transmission methods to these UEs, or applies more effective power-saving mechanisms to these UEs, according to the capabilities of the reduced capability UEs.

In Rel17, the bandwidth that the RedCap UE is able to support is much smaller than a system bandwidth and a regular terminal bandwidth. For frequency range 1 (FR1), a maximum bandwidth that the RedCap UE is able to support is 20 MHz, and for FR2, a maximum bandwidth that the RedCap UE is able to support is 100 MHz. As the bandwidth of the RedCap UE is smaller than that of a regular UE, in order to configure an appropriate bandwidth part (BWP) for the RedCap UE, an initial BWP for the RedCap UE is introduced, which has a bandwidth smaller than the maximum bandwidth that the RedCap UE is able to support. The initial BWP of the RedCap UE may be specifically used for control channels, data channels, various reference signals and random access procedures of the RedCap UE.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In existing methods, an initial downlink BWP for a normal UE must include a cell defining synchronization signal/physical broadcast channel block (CD-SSB) and a control resource set 0 (CORESET#0). A UE in an idle state may camp on the initial downlink BWP to receive system broadcast, monitor paging and perform initial random access and mobility measurement, and a UE in a connected state may perform random access occasion selection, radio resource management (RRM) measurement, radio link measurement (RLM) and beam failure detection and recovery based on a beam of the CD-SSB.

If the initial downlink BWP for the RedCap UE also includes a CD-SSB and CORSET#0, resources used by the RedCap UE and the normal UE are concentrated in the same frequency range, which is inconducive to system load balancing. In order to fully utilize all frequency-domain resources and achieve flexible resource allocation, the initial downlink BWP for the RedCap UE may not include a CD-SSB and CORSET#0, and the RedCap UE in an idle state may monitor paging on an initial downlink BWP special for the RedCap, or the RedCap UE in a connected state may perform data transmission. In addition, a dedicated downlink BWP of the normal UE does not necessarily include a CD-SSB and CORESET#0.

It was found by the inventors that in the existing methods, the UE in the connected state currently performs measurement by using a detected CD-SSB of a primary cell (PCell). If the initial downlink BWP special for the RedCap does not include a CD-SSB, the RedCap UE still needs to perform random access occasion selection, RRM measurement, radio link measurement (RLM) and beam failure detection and recovery based on a CD-SSB. Hence, whenever random access occasion selection, RRM measurement, radio link measurement (RLM) and beam failure detection are needed, the RedCap UE needs to turn back to a CD-SSB from its initial downlink BWP, which is inconducive to transmission efficiency and energy saving of the RedCap UE. In addition, if an active dedicated downlink BWP of a normal UE does not include a CD-SSB, whenever random access occasion selection, RRM measurement, radio link measurement (RLM) and beam failure detection are needed, the UE also needs to turn back to a CD-SSB from the dedicated downlink BWP to perform measurement, which is inconducive to performances and power saving of the UE.

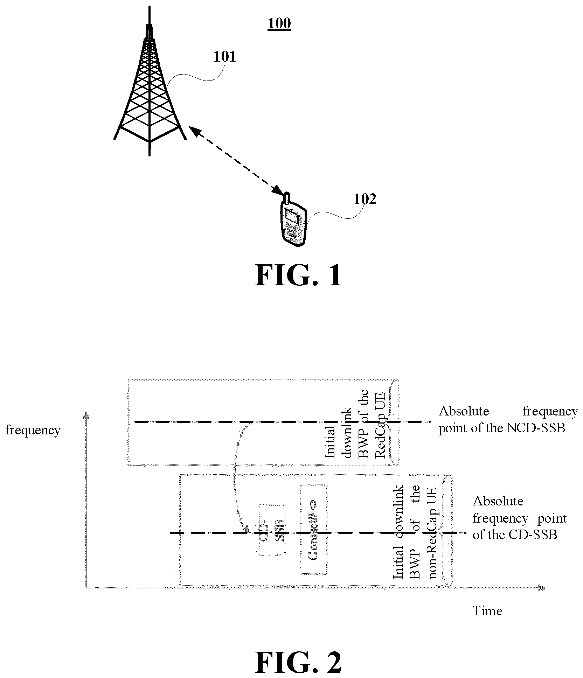

It was further found by the inventors that a UE in an idle or inactive state currently performs cell reselection measurement based on a CD-SSB of a cell where is camps on. FIG. 2 is a schematic diagram of initial downlink BWPs of a normal UE and a RedCap UE. If the UE in an idle or inactive state camps on an initial downlink BWP special for a RedCap UE to monitor paging, as shown in FIG. 2, the RedCap UE needs to jump back from the initial downlink BWP of the RedCap UE to the initial downlink BWP of the normal UE to measure a CD-SSB, so as to perform mobility measurement. This causes the RedCap UE in the idle or inactive state to frequently switch RF receivers between different center frequencies, which causes that the RedCap UE should be configured with a measurement gap, and is very detrimental to spectrum efficiency and energy saving of the RedCap UE.

In order to solve at least one of the above problems or other similar problems, embodiments of this disclosure provide a signal reception method and apparatus and a system.

According to an aspect of the embodiments of this disclosure, there is provided a signal reception apparatus, applicable to a terminal equipment, the apparatus including:
a first receiving unit configured to receive configuration information of a non-cell defining synchronization signal and physical broadcast channel block (NCD-SSB) of a serving cell transmitted by a network device; and
a second receiving unit configured to receive the NCD-SSB of the serving cell transmitted by the network device.

According to another aspect of the embodiments of this disclosure, there is provided a signal transmission apparatus, applicable to a network device, the apparatus including:
a second transmitting unit configured to transmit to a terminal equipment configuration information of an NCD-SSB of a serving cell; and
a third transmitting unit configured to transmit the NCD-SSB of the serving cell to the terminal equipment.

An advantage of the embodiments of this disclosure exists in that by transmitting configuration information of an NCD-S SB by a network device to a terminal equipment, the terminal equipment may perform measurement by using the NCD-SSB, and does not necessarily perform measurement by using a CD-SSB. Hence, unnecessary handover of the UE between different frequency points may be reduced, and transmission efficiency and energy saving may be improved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of this disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of normal skills in the art, other accompanying drawings may be obtained according to these accompanying drawings without making an inventive effort. In the drawings:
FIG. 1 is schematic diagram of a communication system of an embodiment of this disclosure;
FIG. 2 is a schematic diagram of initial downlink BWPs of a normal UE and a RedCap UE;
FIG. 3 is a schematic diagram of a signal reception method of an embodiment of this disclosure;
FIGs. 4-7 are schematic diagrams of NCD-SSB frequency positions;
FIG. 8 is a schematic diagram of a signal transmission method of an embodiment of this disclosure;
FIG. 9 is a schematic diagram of a signal reception apparatus of an embodiment of this disclosure;
FIG. 10 is a schematic diagram of a signal transmission apparatus of an embodiment of this disclosure;
FIG. 11 is a schematic diagram of a network device of an embodiment of this disclosure; and
FIG. 12 is a schematic diagram of a terminal equipment of an embodiment of this disclosure.

### Detailed Description of the Disclosure

These and further aspects and features of this disclosure will be apparent with reference to the following description and attached drawings. In the description and drawings, particular embodiments of this disclosure have been disclosed in detail as being indicative of some of the ways in which the principles of this disclosure may be employed, but it is understood that this disclosure is not limited correspondingly in scope. Rather, this disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the CU/DU is/are a logical node(s) of a gNB having some functions of a gNB. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or a core network device, and may include one or more network devices described above. The term "user side" or "terminal side" or "terminal equipment side" refers to a side of a user or a terminal, which may be a UE, and may include one or more terminal equipments described above. "Device" may refer to a network device, or may refer to a terminal equipment, except specified otherwise.

Scenarios of the embodiments of this disclosure shall be described below by way of examples; however, this disclosure is not limited thereto.

FIG. 1 is a schematic diagram of a communication system of an embodiment of this disclosure, in which a case where a terminal equipment and a network device are taken as examples is schematically shown. As shown in FIG. 1, a communication system 100 may include a network device 101 and a terminal equipment 102. For the sake of simplicity, an example having only one terminal equipment and one network device is schematically given in FIG. 1; however, the embodiment of this disclosure is not limited thereto.

In the embodiment of this disclosure, existing traffics or traffics that may be implemented in the future may be performed between the network device 101 and the terminal equipment 102. For example, such traffics may include but not limited to enhanced mobile broadband (eMBB), massive machine type communication (MTC), ultra-reliable and low-latency communication (URLLC) and communication related to reduced capacity terminal equipments.

The embodiments of this disclosure shall be described below with reference to the embodiments.

### Embodiment of a first aspect

The embodiment of this disclosure provides a signal reception method, which shall be described from a side of a terminal equipment.

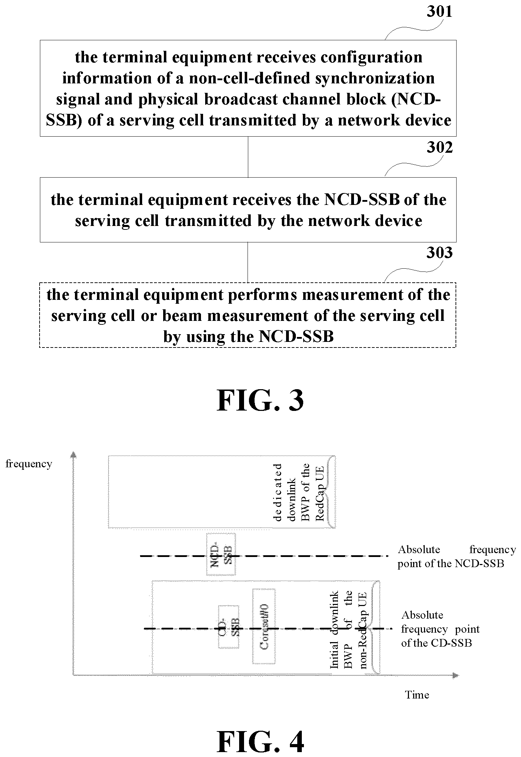

FIG. 3 is a schematic diagram of a signal reception method of the embodiment of this disclosure. As shown in FIG. 3, the method includes:
301: the terminal equipment receives configuration information of a non-cell defining synchronization signal and physical broadcast channel block (NCD-SSB) of a serving cell transmitted by a network device; and
302: the terminal equipment receives the NCD-SSB of the serving cell transmitted by the network device.

It should be noted that FIG. 3 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the terminal equipment obtains an SSB, a function of the SSB being related to many aspects of accessing cell by UE, such as cell search, beam measurement, beam selection, and beam recovery, such as obtaining a master information block (MIB), the MIB including configuration related to system information block1 (SIB1), the configuration including control resource set 0 (CORESET#0) configuration and search space 0 (SS#0) configuration. The terminal equipment determines PDCCH monitoring occasions according to control resource set 0 and search space 0, monitors PDCCHs at the monitoring occasions, and obtains SIB 1 according to physical downlink shared channel (PDSCH) information indicated by the PDCCHs. Configuration information of an initial downlink bandwidth part (BWP) is included in SIB 1.

In some embodiments, the CD-SSB refers to an SSB that in an MIB message indicating a time-frequency resource position of a PDCCH scheduling SIB1, the NCD-SSB refers to an SSB that in an MIB message not including indication to a time-frequency resource position of a PDCCH scheduling SIB1, and the SSBs may include primary synchronization signals (PSSs), secondary synchronization signals (SSSs), and/or physical broadcast channels (PBCH). The network device transmits configuration of the NCD-SSB to the terminal equipment, so that the terminal equipment may perform measurement by using the NCD-SSB without necessarily using the CD-SSB to perform measurement, which may reduce unnecessary handover of the UE between different frequency points, and improve transmission efficiency and energy saving.

In some embodiments, the method may further include:
303: the terminal equipment performs measurement of the serving cell or beam measurement of the serving cell by using the NCD-SSB. Types of the measurement shall be described in detail later.

In some embodiments, the configuration information of the NCD-SSB includes an absolute frequency point of the NCD-SSB. For example, the absolute frequency point may be identified by an absolute radio frequency channel number (ARFCN), and a frequency position of the NCD-SSB (a center frequency position of the NCD-SSB) may be calculated according to the absolute radio frequency channel number.

In some embodiments, optionally, the configuration information of the NCD-SSB may include at least one piece of the following additional information: a period of the NCD-SSB, a subcarrier spacing of the NCD-SSB, transmit power of the NCD-SSB, time window configuration of the NCD-SSB (including a subframe offset in the period and the number of subframes that are successively transmitted), or an SSB index of the NCD-SSB actually transmitted in each half-frame.

In some embodiments, in order for the terminal equipment to obtain identical results in measuring the NCD-SSB and the CD-SSB, an NCD-SSB and a CD-SSB of the same serving cell need to be identical. For example, a period of the NCD-SSB of the serving cell is identical to a period of the CD-SSB of the serving cell; and/or, a subcarrier spacing of the NCD-SSB of the serving cell is identical to a subcarrier spacing of the CD-SSB of the serving cell; and/or, transmit power of the NCD-SSB of the serving cell is identical to transmit power of the CD-SSB of the serving cell; and/or, a transmission time window of the NCD-SSB of the serving cell is identical to transmission time window of the CD-SSB of the serving cell; and/or, an SSB index of the NCD-SSB of the serving cell transmitted in each half-frame is identical to an SSB index of the CD-SSB of the serving cell transmitted in each half-frame; and/or, an NCD-SSB beam of the serving cell is in a quasi-colocation (QCL) relationship with a CD-SSB beam of the serving cell having an index identical thereto. However, the embodiment of this disclosure is not limited thereto, and the above information may also be configured to be other values.

In some embodiments, the configuration information of the NCD-SSB may also not include at least one of the above additional information, and the above additional information may be determined according to the configuration information of the CD-SSB of the serving cell.

In some embodiments, the configuration information of the CD-SSB includes at least one of the period of the CD-SSB, the subcarrier spacing of the CD-SSB, the transmit power of the CD-SSB, a time window position of the CD-SSB, or the SSB index of the CD-SSB actually transmitted in each half-frame. The configuration information of the above CD-SSB may be carried by SIB1 of system information, or may be obtained by detecting the CD-SSB by the UE. For example, the period of the CD-SSB and the subcarrier spacing of the CD-SSB may be obtained by the UE in detecting the CD-SSB, and the transmit power of the CD-SSB, the time window position of the CD-SSB and the SSB index actually transmitted by the CD-SSB in each half-frame may be carried by SIB 1; however, the embodiment of this disclosure is not limited thereto.

In some embodiments, the terminal equipment determines the above additional information of the NCD-SSB according to the configuration information of the CD-SSB of the serving cell. For example, the terminal equipment may use the configuration information of the CD-SSB as additional information to which the NCD-SSB corresponds, that is, in the same serving cell, configuration information of a CD-SSB is identical to additional information to which an NCD-SSB corresponds. For example, the period of the NCD-SSB is identical to that of the CD-SSB, the network device does not transmit configuration of the period of the NCD-SSB, and the terminal equipment takes the period of the CD-SSB as the period of the NCD-SSB; or, the subcarrier spacing of the NCD-SSB is identical to that of the CD-SSB, the network device does not transmit configuration of the subcarrier spacing of the NCD-SSB, and the terminal equipment takes the subcarrier spacing of the CD-SSB as the subcarrier spacing of the NCD-SSB; or, the transmit power of the NCD-SSB is identical to that of the CD-SSB, the network device does not transmit configuration of the transmit power of the NCD-SSB, and the terminal equipment takes the transmit power of the CD-SSB as the transmit power of the NCD-SSB; or, a transmission time position of the NCD-SSB is identical to that of the CD-SSB, the network device does not transmit configuration of the time window position of the NCD-SSB, and the terminal equipment takes the time window position of the CD-SSB as the time window position of the NCD-SSB; or, the SSB index of the NCD-SSB actually transmitted by the NCD-SSB is identical to that of the CD-SSB, the network device does not transmit configuration of the SSB index of the NCD-SSB actually transmitted, and the terminal equipment takes the SSB index of the CD-SSB actually transmitted in each half-frame as the SSB index of the NCD-SSB actually transmitted in each half-frame. For another example, the terminal equipment may determine the additional information to the NCD-SSB corresponds by using a predetermined relationship between the configuration information of the CD-SSB and the NCD-SSB. For example, the predetermined relationship is that the period of the CD-SSB is twice the period of the NCD-SSB, or the subcarrier spacing of the CD-SSB is twice the subcarrier spacing of the NCD-SSB, or the transmit power of the CD-SSB is twice the transmit power of the NCD-SSB, etc.; however, the embodiment of this disclosure is not limited thereto.

In some embodiments, the configuration information of the NCD-SSB may be carried by dedicated RRC signaling, or may be carried by system information, or may be carried in a handover command, which shall be described below respectively.

### (I) The configuration information of the NCD-SSB is carried by an RRC reconfiguration message

In some embodiments, for a UE in a connected state, the configuration information of the NCD-SSB may be carried by the RRC reconfiguration message. In existing methods, the terminal equipment in the connected state performs measurement by using a detected CD-SSB, hence, the above-described technical problems may exist. In the embodiment of this disclosure, the network device carries the configuration information of the NCD-SSB via dedicated RRC signaling and notify to the UE in the connected state, so as to support the UE in the connected state to perform measurement based on the NCD-SSB. The UE in the connected state may include a normal terminal equipment or an enhanced capability terminal equipment (hereinafter referred to as a first type of terminal equipment) or a reduced capability terminal equipment (RedCap UE, hereinafter referred to as a second type of terminal equipment), and the embodiment of this disclosure is not limited thereto.

In some embodiments, the configuration of the NCD-SSB is configuration for the serving cell, or may be configuration for a specific bandwidth part of the serving cell, which shall be described below respectively.

In some embodiments, the network device may configure the NCD-SSB of the serving cell, and the configuration information of the NCD-SSB is included in cell-specific configuration of a primary cell (PCell) in the RRC reconfiguration message, or is included in cell-common configuration or cell-specific configuration of a secondary cell (SCell) or a primary secondary cell (PSCell). For example, for the second type of terminal equipment, the configuration information of the NCD-SSB is included in the cell-specific configuration (ServingCellConfig) of the PCell, and for the first type of terminal equipment, the configuration information of the NCD-SSB is included in the cell-specific configuration (ServingCellConfig) of the PCell, or in the cell-common configuration (ServingCellConfigCommon) or cell-specific configuration (ServingCellConfig) of the secondary cell (SCell) or primary secondary cell (PSCell).

In some embodiments, as the NCD-SSB is not configured for a specific BWP, but for a serving cell, a frequency range of the NCD-SSB may or may not be included in a current active downlink BWP of the terminal equipment. FIG. 4 is a schematic diagram of a frequency range of the NCD-SSB of the second type of terminal equipment in the embodiment of this disclosure. As shown in FIG. 4, the frequency range of the NCD-SSB is not within the downlink BWP.

In some embodiments, the network device may configure an NCD-SSB in a specific bandwidth part (BWP) of the serving cell. Configuration information of the NCD-SSB is included in dedicated configuration of an initial downlink BWP or dedicated configuration or common configuration of a dedicated downlink BWP in cell-specific configuration of the PCell, or included in an initial downlink BWP in the cell-common configuration or cell-specific configuration of the SCell/PSCell, or included in common configuration or dedicated configuration of a dedicated downlink BWP in cell-specific configuration of the SCell/PSCell, in the RRC reconfiguration message. For example, for the first type of terminal equipment, the configuration information of the NCD-SSB is included in dedicated configuration of a first initial downlink BWP (initialDownlinkBWP) in the cell-specific configuration (ServingCellConfig) of the PCell, or is included in the common configuration or dedicated configuration of the dedicated downlink BWP; or is included in initial downlink BWP configuration in the cell-common configuration (ServingCellConfigCommon) or cell-specific configuration (ServingCellConfig) of the SCell/PSCell, or is included in the common configuration or dedicated configuration of the dedicated downlink BWP in the cell-specific configuration (ServingCellConfig) of the SCell/PSCell. In this way, when the first type of terminal equipment activates a specific BWP in the serving cell, it performs measurement by using an NCD-SSB to which the specific BWP corresponds. For the second type of terminal equipment, the configuration information of the NCD-S SB may be in the dedicated configuration in the specific initial downlink BWP (initialDownlinkBWP) in the cell-specific configuration (ServingCellConfig) of the PCell, so that the second type of terminal equipment performs measurement by using the NCD-SSB to which the initial downlink BWP correspond in activating a second initial downlink BWP of the PCell; or, it may be included in the common configuration or dedicated configuration of the dedicated downlink BWP in the cell-specific configuration (ServingCellConfig) of the PCell, so that the second type of terminal equipment performs measurement by using the NCD-SSB to which the dedicated downlink BWP correspond in activating the dedicated downlink BWP of the PCell.

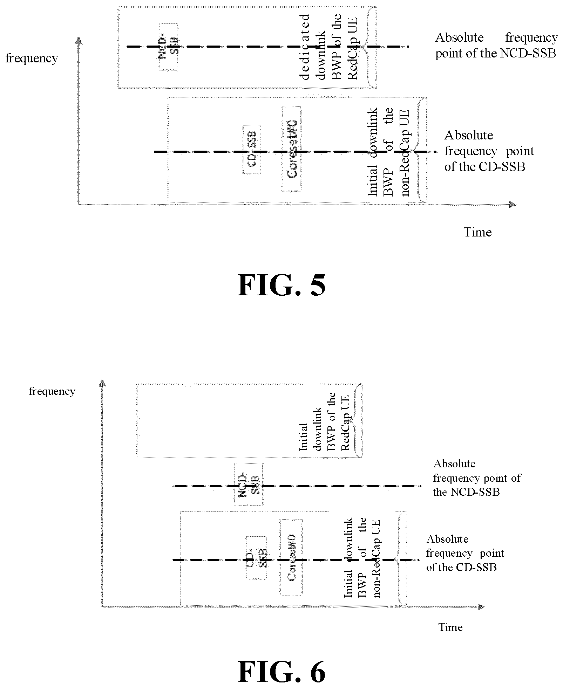

In some embodiments, as the NCD-SSB is configured for a specific BWP, the frequency range of the NCD-SSB is included in the current active downlink BWP of the terminal equipment. FIG. 5 is a schematic diagram of the frequency range of the NCD-SSB of the second type of terminal equipment in the embodiment of this disclosure. As shown in FIG. 5, the NCD-SSB is configured for a specific dedicated downlink BWP, and its frequency range is included in the dedicated downlink BWP.

In some embodiments, the terminal equipment in the connected state performs measurement for at least one of the following purposes by using the NCD-SSB: radio resource management (RRM); physical random access channel (PRACH) occasion selection; radio link monitoring (RLM); or beam failure detection (BFD) or beam failure recovery (BFR). Reference may be to the CD-SSB for a specific measurement method, which shall not be repeated herein any further.

In some embodiments, it may be determined by the terminal equipment or the network device whether to perform measurement by using the configured NCD-SSB or whether to perform measurement by using the NCD-SSB or the CD-SSB. When the NCD-SSB is determined to be used, 303 is executed.

For example, it may be determined by the terminal equipment whether to perform measurement by use the configured NCD-SSB. For example, the frequency range of the NCD-SSB is included in the current active downlink BWP, and the terminal equipment in the connected state performs measurement in the connected state based on the NCD-SSB; otherwise, it performs measurement in the connected state based on the CD-SSB; or, when the period of the NCD-SSB is less than a preset period, the terminal equipment in the connected state performs measurement in the connected state based on the NCD-SSB; otherwise, it performs measurement in the connected state based on the CD-SSB. This is because when the period of the NCD-SSB is too long, performing measurement by using the NCD-SSB may result in relatively large delay, thereby leading to a decrease in measurement reliability. What described above is illustrative only, and the embodiment of this disclosure is not limited thereto.

For example, it may be determined by the network device whether the terminal equipment performs measurement by using the configured NCD-SSB, and the method may further include: the terminal equipment transmits, capability indication information indicating that the NCD-SSB is needed for use in performing measurement to the network device; and receives first indication information transmitted by the network device, the first indication information being used to indicate that the terminal equipment in the connected state performs measurement based on the NCD-SSB or performs measurement based on the CD-SSB in the connected state. The first indication information is included in the measurement configuration transmitted by the network device. Furthermore, if the first indication information indicates that the terminal equipment in the connected state performs measurement based on the NCD-SSB, relevant measurement parameters in the measurement configuration are all parameters for NCD-SSB measurement, such as received power or a received quality threshold (s-MeasureConfig) or an L3 filter coefficient for the terminal equipment to initiate measurement of a non-serving cell, which shall not be enumerated herein any further. Implementation at the network device side shall be explained in detail in an embodiment of a second aspect.

It should be noted that the above description is given by taking the RRC reconfiguration message as an example, the configuration information may also be carried by other dedicated RRC signaling, and the embodiment of this disclosure is not limited thereto.

### (II) The configuration information of the NCD-SSB is carried by the system information of the serving cell

In some embodiments, for a UE in an idle/inactive state, the network device may carry the configuration information of the NCD-SSB via the system information of the serving cell. In existing methods, the UE in the idle/inactive state performs mobility measurement of cell reselection based on received quality of the CD-SSB, therefore, the above technical problems may exist. In the embodiment of this disclosure, the network device carries the configuration information of the NCD-SSB via the system information and notify to the UE in the idle/inactive state, so as to support the UE in the idle/inactive state to perform measurement based on the NCD-SSB, such as measuring the serving cell in a cell reselection procedure by using the NCD-SSB. The UE in the idle/inactive state may be a second type of terminal equipment, and the embodiment of this disclosure is not limited thereto.

In some embodiments, for the UE in the connected state, the network device may also carry the configuration information of the NCD-SSB via the system information of the serving cell. In existing methods, the terminal equipment in the connected state performs measurement by using a detected CD-SSB, therefore, the above technical problems may exist. In the embodiment of this disclosure, the network device carries the configuration information of the NCD-SSB via the system information to notify to the UE in the connected state, so as to support the UE in the connected state to perform measurement based on the NCD-SSB. The UE in the connected state may include the first type of terminal equipment or the second type of terminal equipment, and the embodiment of this disclosure is not limited thereto.

In some embodiments, the configuration of the NCD-SSB is configuration for the serving cell, or may be configuration for a specific bandwidth part of the serving cell, which shall be described below respectively.

The network device may configure the NCD-SSB of the serving cell, the configuration information of the NCD-SSB being included in SIB1, or being included in cell-common configuration (servingCellConfigCommon) included in SIB1. As the NCD-SSB is not configured for a specific BWP, but for a serving cell, the frequency range of the NCD-SSB may or may not be included in the BWP of the serving cell. For example, in order for the second type of terminal equipment to camp on a second initial BWP, the frequency range of the NCD-SSB may be included in a second initial downlink BWP, wherein the second initial downlink BWP is used for the second type of terminal equipment, and the second initial downlink BWP does not include a CD-SSB. However, the frequency range of the NCD-SSB may also not be included in the second initial downlink BWP, and may also be included in the first initial downlink BWP, which are not limited in this disclosure. FIG. 6 is a schematic diagram of the frequency range of the NCD-SSB of the second type of terminal equipment in the embodiment of this disclosure. As shown in FIG. 6, the frequency range of the NCD-SSB is not located in the second initial downlink BWP, nor is located in the first initial downlink BWP.

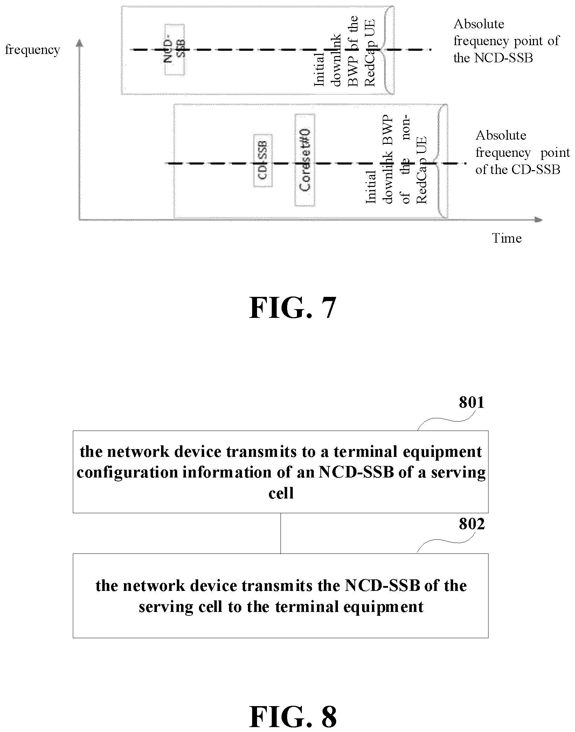

In some embodiments, the network device may configure an NCD-SSB in a specific bandwidth part (BWP) of the serving cell. For example, configuration information of the NCD-SSB is included in common configuration of a first initial downlink BWP or common configuration of a second initial downlink BWP in cell-common configuration (servingCellConfigCommon) included in SIB 1. As the NCD-SSB is configured for a specific BWP, its frequency range is included in a specific BWP of the serving cell. For example, when the second initial BWP does not include a CD-SSB, in order for the second type of terminal equipment to camp on the second initial BWP, an NCD-SSB is configured and included in the second initial downlink BWP. FIG. 7 is a schematic diagram of a frequency range of the NCD-SSB of the second type of terminal equipment in the embodiment of this disclosure. As shown in FIG. 7, the second initial BWP does not include a CD-SSB, and the frequency range of the NCD-SSB is located in the second initial downlink BWP.

In some embodiments, the terminal equipment in the connected state performs measurement for at least one of the following purposes by using the NCD-SSB: radio resource management (RRM); physical random access channel (PRACH) occasion selection; radio link monitoring (RLM); or beam failure detection (BFD) or beam failure recovery (BFR). The terminal equipment in the idle/inactive state performs mobility measurement of cell reselection by using the NCD-SSB. Reference may be to the CD-SSB for a specific measurement method, which shall not be repeated herein any further.

In some embodiments, it may be determined by the terminal equipment or the network device whether to perform measurement by using the configured NCD-SSB or whether to perform measurement by using the NCD-SSB or the CD-SSB. When the NCD-SSB is determined to be used, 303 is executed.

In some embodiments, it may be determined by the terminal equipment whether to perform measurement by using the configured NCD-SSB. For example, when at least one of the following conditions is satisfied, the terminal equipment in the idle/inactive state performs measurement based on the NCD-SSB:
that the frequency range of the NCD-SSB is included in the initial downlink BWP;
that the initial downlink BWP contains common search space (CSS) configuration for paging;
that the system information block contains configuration information for cell reselection based on the NCD-SSB; or
that the period of the NCD-SSB is less than the preset period.

In some embodiments, for the terminal equipment in the idle/inactive state, when the NCD-SSB configuration is for the serving cell, the frequency position of the NCD-SSB is included in the initial downlink BWP (such as the second initial downlink BWP), the initial downlink BWP further includes a paging common search space and the system information block (such as SIB2) contains configuration information for performing cell reselection based on the NCD-SSB, the terminal equipment in the idle/inactive state performs measurement based on the NCD-SSB; otherwise, it performs measurement based on the CD-SSB. This is because in the case where the frequency position of the NCD-SSB is included in the initial downlink BWP, the initial downlink BWP further includes a paging common search space and the system information block (such as SIB2) contains the configuration information for performing cell reselection based on the NCD-SSB, if the terminal equipment may perform measurement of cell reselection based on the NCD-SSB, the terminal equipment may camp on the initial downlink BWP while perform paging monitoring and measurement of cell reselection, without the need to switch reception frequency points, thereby saving power to a maximum extents. Or, when the period of the NCD-SSB is less than the preset period, the terminal equipment in the idle/inactive state performs measurement based on the NCD-SSB; otherwise, it performs measurement still based on the CD-SSB. This is because when the period of the NCD-SSB is too long, performing measurement by using the NCD-SSB may result in relatively large delay, leading to a decrease in measurement reliability. What describe above is illustrative only; however, the embodiment of this disclosure is not limited thereto. For example, the terminal equipment in the idle/inactive state may be a second type of terminal equipment; and for another example, the conditions for the terminal equipment in the idle/inactive state to perform measurement based on the NCD-SSB further include that the initial downlink BWP of the serving cell does not include a CD-SSB.

In some embodiments, for the terminal equipment in the idle/inactive state, when the NCD-SSB configuration is for specific BWP of the serving cell, when the initial downlink BWP (such as the second initial downlink BWP) contains the configuration information of the NCD-SSB and paging common search space and the system information block (such as SIB2) contains the configuration information for performing cell reselection based on the NCD-SSB, the terminal equipment in the idle/inactive state performs measurement based on the NCD-SSB; otherwise, it performs measurement still based on the CD-SSB. This is because in the case where the initial downlink BWP (such as the second initial downlink BWP) contains the configuration information of the NCD-SSB and paging common search space and the system information block (such as SIB2) contains the configuration information for performing cell reselection based on the NCD-SSB, if the terminal equipment may perform measurement of cell reselection based on the NCD-SSB, it may camp on the initial downlink BWP while perform paging monitoring and measurement of cell reselection, without the need to switch reception frequency points, thereby saving power to a maximum extent. Or, when the period of the NCD-SSB is less than the preset period, the terminal equipment in the idle/inactive state performs measurement based on the NCD-SSB; otherwise, it performs measurement still based on the CD-SSB. This is because when the period of the NCD-SSB is too long, performing measurement by using the NCD-SSB may result in relatively large delay, leading to a decrease in measurement reliability. What described above is illustrative only; however, the embodiment of this disclosure is not limited thereto. For example, the terminal equipment in the idle/inactive state may be a second type of terminal equipment; and for another example, the conditions for the terminal equipment in the idle/inactive state to perform measurement based on the NCD-SSB further include that the initial downlink BWP of the serving cell do not include a CD-SSB.

In some embodiments, for the terminal equipment in the connected state, when the frequency range of the NCD-SSB is included in the current active downlink BWP, the terminal equipment in the connected state performs measurement in the connected state based on the NCD-SSB; otherwise, it performs measurement in the connected state still based on the CD-SSB; or, when the period of the NCD-SSB is less than the preset period, the terminal equipment in the connected state performs measurement in the connected state based on the NCD-SSB; otherwise, it performs measurement in the connected state still based on the CD-SSB. This is because when the period of the NCD-SSB is too long, performing measurement by using the NCD-SSB may cause relatively large delay, leading to a decrease in measurement reliability. What described above is illustrative only; however, the embodiment of this disclosure is not limited thereto. The terminal equipment in the connected state may be a first type of terminal equipment or a second type of terminal equipment however, this disclosure is not limited thereto.

In some embodiments, for the terminal equipment in the connected state, the network device may determine whether the terminal equipment performs measurement by using the configured NCD-SSB. The method may further include: the terminal equipment transmits, capability indication information indicating that the NCD-SSB is needed for use in performing measurement to the network device; and receives first indication information transmitted by the network device, the first indication information being used to indicate that the terminal equipment in the connected state performs measurement in the connected state based on an NCD-SSB or based on a CD-SSB. The first indication information is included in the measurement configuration transmitted by the network device. Furthermore, if the first indication information indicates that the terminal equipment in the connected state performs measurement based on the NCD-SSB, the relevant measurement parameters in the measurement configuration are all parameters for NCD-SSB measurement, such as s-MeasureConfig, and an L3 measurement filter coefficient, etc., which shall not be enumerated herein any further. Implementation at the network device side shall be described in detail in an embodiment of a second aspect.

It should be noted that the above description is given by taking SIB 1 as an example, the configuration information may also be carried by other system information, and the embodiment of this disclosure is not limited thereto.

### (III) The configuration information of the NCD-SSB is carried by the handover command RRC reconfiguration message

In some embodiments, for the UE in the connected state, the configuration information of the NCD-SSB may be carried by the handover command RRC reconfiguration message. In existing methods, in a case of handover, an SSB absolute frequency point of a target cell (a serving cell after handover) carried in a handover command transmitted by a target network device (a network device of a serving cell after handover) to a UE is a frequency point position of a CD-SSB of the target cell. A terminal equipment after handover may perform measurement based only on the CD-SSB. Hence, the technical problems may exist. In the embodiment of this disclosure, the network device carries the configuration information of the NCD-SSB via the handover command RRC reconfiguration message to notify to the UE, so as to support the UE in the connected state to perform measurement based on the NCD-SSB after being handed over to the target cell. The UE in the connected state may include a first type of terminal equipment or a second type of terminal equipment, and the embodiment of this disclosure is not limited thereto.

In some embodiments, the NCD-SSB configuration information may be included in common configuration (ServingCellConfigCommon) of the serving cell (target cell) after the terminal equipment is handed over included in the handover command RRC reconfiguration message (such as an RRC message containing a ReconfigurationWithSync information element). For example, an absolute SSB frequency point (absoluteFrequencySSB) information element contained in a downlink frequency information element (FrequencyInfoDL) of the cell-common configuration may be used to indicate the configuration information of the NCD-SSB (an absolute frequency point of the NCD-SSB) of the serving cell after handover.

In some embodiments, optionally, the terminal equipment may also receive common configuration of the second initial downlink BWP of the serving cell after handover via the handover command RRC reconfiguration message. For example, for the second type of terminal equipment, the common configuration (initialDownlinkBWP-RedCap) of the second initial downlink BWP may be added to downlink common configuration (DownlinkConfigCommon) in the common configuration (ServingCellConfigCommon) of the serving cell (target cell) after the terminal equipment is handed over.

For example, cell-common configuration may be expressed by abstract syntax ASN. 1 data format as:

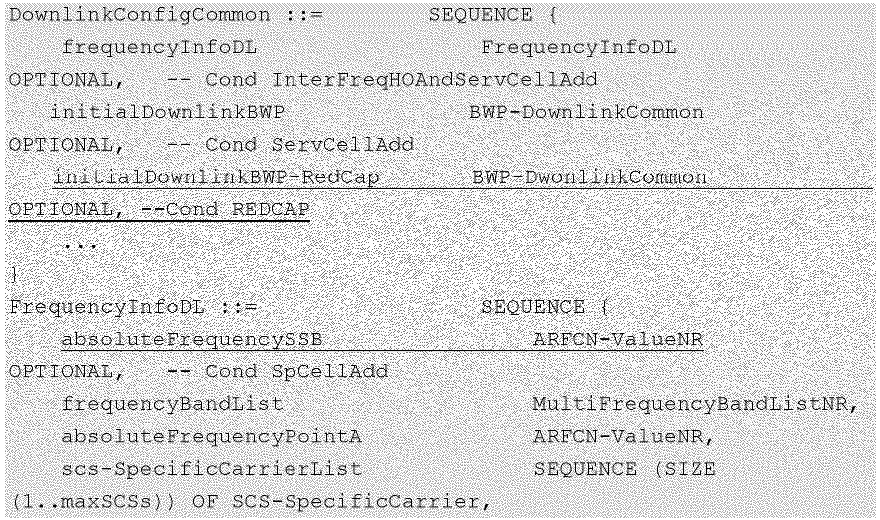

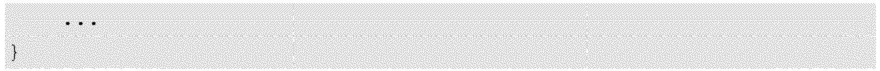

What described above is illustrative only, and the embodiment of this disclosure is not limited thereto.

In some embodiments, the NCD-SSB configuration information is included in the common configuration (ServingCellConfigCommon) of the serving cell (target cell) after the terminal equipment is handed over included in the handover command RRC reconfiguration message (such as RRC reconfiguration message containing ReconfigurationWithSync).

For example, when the absoluteFrequencySSB information element indicates the absolute frequency point of the NCD-SSB of the serving cell after handover, the SSB parameters in the cell-common configuration (ServingCellConfigCommon) are for the NCD-SSB. For example, a parameter ssb-PositionsInBurst indicates the period of the NCD-SSB, a parameter SCS indicates the subcarrier spacing of the NCD-SSB, a parameter ss-PBCH-BlockPower indicates the transmit power of the NCD-SSB, a parameter ssb-PositionsInBurst indicates the SSB index of the NCD-SSB actually transmitted in each half-frame, and a parameter SSB-MTC indicates the time window position of the NCD-SSB (including a subframe offset in the period and the number of subframes that are continuously transmitted), which shall not be enumerated herein any further.

In some embodiments, the terminal equipment in the connected state performs measurement for at least one of the following purposes by using the NCD-SSB: radio resource management (RRM); physical random access channel (PRACH) occasion selection; radio link monitoring (RLM); or beam failure detection (BFD) or beam failure recovery (BFR). The terminal equipment in the idle/inactive state performs mobility measurement of cell reselection by using the NCD-SSB. Reference may be to the CD-SSB for a specific measurement method, which shall not be repeated herein any further.

In some embodiments, it may be determined by the terminal equipment or the network device whether to perform measurement by use the configured NCD-SSB, or whether to perform measurement by use the NCD-SSB or the CD-SSB. When the NCD-SSB is determined to be used, 303 is executed.

In some embodiments, it may be determined by the terminal equipment whether to perform measurement by using the configured NCD-SSB. For example, when the frequency range of the NCD-SSB is included in an active downlink BWP of the terminal equipment after handover, the terminal equipment performs measurement in the connected state based on the NCD-SSB after being handed over to the serving cell; otherwise, it performs measurement in the connected state still based on the CD-SSB.

In some embodiments, it may be determined by the network device (the network device of the target cell, or the network device of the serving cell after handover) whether the terminal equipment performs measurement by using the configured NCD-SSB. The method may further include: the terminal equipment transmits, capability indication information indicating that the NCD-SSB is needed for use in performing measurement to source network device (the network device of the serving cell before handover), and the source network device forwards the capability indication information (forwarded during a handover preparation procedure) to the network device; and the terminal equipment receives, first indication information transmitted by the network device. The first indication information is used to indicate the terminal equipment in the connected state to perform measurement based on the NCD-SSB or perform measurement in the connected state based on the CD-SSB. For example, the first indication information is included in measurement configuration (the measurement configuration is carried by the handover command) transmitted by the network device. Furthermore, if the first indication information indicates the terminal equipment in the connected state to perform measurement based on the NCD-SSB, relevant measurement parameters in the measurement configuration are all parameters for the NCD-SSB measurement, such as s-MeasureConfig, and an L3 measurement filter coefficient, etc., which shall not be enumerated herein any further. The terminal equipment in the connected state may be a first type of terminal equipment, or a second type of terminal equipment, and the embodiment of this disclosure is not limited thereto.

In some embodiments, as the terminal equipment needs to read the system information (such as MIB or SIB1) transmitted by the serving cell (target cell) after handover, and the terminal equipment can not read SIB 1 via the NCD-SSB, it may read SIB1 via the CD-SSB only. In order that the terminal equipment does not need to detect the CD-SSB and receive the MIB and SIB1 of the serving cell (target cell) after handover, the method may further include: the terminal equipment receives the SIB1 message of the serving cell after handover via the handover command RRC reconfiguration message.

It should be noted that the above description is given by taking the handover command RRC reconfiguration message as an example, the configuration information may also be carried by other handover commands, and the embodiment of this disclosure is not limited thereto.

In some embodiments, in 302, the terminal equipment may detect or receive the NCD-SSB according to the configuration information of the NCD-SSB, such as determining a time-domain/frequency-domain position(s) of the NCD-SSB according to the time window, period, and absolute frequency point, etc., of the NCD-SSB, and performing detection and reception. Reference may be made to existing techniques for details, which shall not be repeated herein any further.

In addition, the above implementations only illustrate the embodiment of this disclosure. However, this disclosure is not limited thereto, and appropriate variants may be made on the basis of these implementations. For example, the above implementations may be executed separately, or one or more of them may be executed in a combined manner.

With the above embodiment, by transmitting the configuration information of the NCD-SSB by the network device to the terminal equipment, the terminal equipment may perform measurement by using the NCD-SSB, and does not necessarily perform measurement by using a CD-SSB. Hence, unnecessary handover of the UE between different frequency points may be reduced, and transmission efficiency and energy saving may be improved.

### Embodiment of a second aspect

The embodiment of this disclosure provides a signal transmission method, which shall be described from a side of a side of a network device.

FIG. 8 is a schematic diagram of a signal transmission method of the embodiment of this disclosure. As shown in FIG. 8, the method includes:
801: the network device transmits to a terminal equipment configuration information of an NCD-SSB of a serving cell; and
802: the network device transmits the NCD-SSB of the serving cell to the terminal equipment.

It should be noted that FIG. 8 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 8.

In some embodiments, reference may be made to 301-302 in the embodiment of the first aspect for implementations of 801-802, and repeated parts shall not be described herein any further.

In some embodiments, reference may be made to the embodiment of the first aspect for contents of the configuration information of the NCD-SSB, the configuration information of the NCD-SSB may be carried by specific RRC signaling, or may be carried by system information, or may be carried by a handover command, and reference may be made to the embodiment of the first aspect for details, which shall not be described herein any further.

In some embodiments, the network device may determine whether to transmit/configure/indicate the configuration information of the NCD-SSB, or, in other words, the network device may determine whether to configure the NCD-SSB for the terminal equipment and whether to configure the frequency range of the NCD-SSB in a specific BWP, which shall be described below for different cases.

In some embodiments, when the initial downlink BWP or dedicated downlink BWP of the serving cell does not include a CD-SSB, the network device transmits the configuration information of the NCD-SSB of the serving cell, and configures the frequency range of the NCD-SSB within the initial downlink BWP or dedicated downlink BWP of the serving cell, such as transmitting the configuration information of the NCD-SSB of the serving cell to the UE in the connected state via the RRC reconfiguration message or system information, or transmitting the configuration information of the NCD-SSB of the serving cell to the UE in the idle/inactive state via the system information. The terminal equipment may be a first type of terminal equipment or a second type of terminal equipment, and the embodiment of this disclosure is not limited thereto. In some embodiments, when the second initial downlink BWP includes common search space configuration for paging and does not include a CD-SSB, the network device transmits the configuration information of the NCD-SSB of the serving cell and configures the frequency range of the NCD-SSB in the second initial downlink BWP of the serving cell, such as transmitting the configuration information of the NCD-SSB of the serving cell via the system information. The terminal equipment may be a UE in an idle/inactive state, and may be a second type of terminal equipment, and the embodiment of this disclosure is not limited thereto.

In some embodiments, when an active BWP after the terminal equipment is handed over to the serving cell does not include a CD-SSB, the network device transmits configuration information of an NCD-SSB of the serving cell after handover, and configures a frequency range of the NCD-SSB within the active BWP after the terminal equipment is handed over to the serving cell, such as transmitting the configuration information of the NCD-SSB (an absolute frequency point of the NCD-SSB) of the serving cell after handover to the terminal equipment via a handover command, etc. The terminal equipment may be a UE in a connected state, and may be either a first type of terminal equipment or a second type of terminal equipment, and the embodiment of this disclosure is not limited thereto.

In some embodiments, it may be determined by the network device whether to perform measurement by using the configured NCD-SSB. For example, the method may further include: the network device receives, capability indication information indicating that the NCD-SSB is needed for use in performing measurement transmitted by the terminal equipment (or forwarded by a source network device); and transmits first indication information to the terminal equipment. The first indication information is used to indicate the terminal equipment in the connected state to perform measurement in the connected state based on the NCD-SSB or perform measurement in the connected state based on the CD-SSB. The first indication information is included in measurement configuration transmitted by the network device. If the first indication information indicates the terminal equipment in the connected state to perform measurement based on the NCD-SSB, relevant measurement parameters in the measurement configuration are all parameters for the NCD-SSB measurement, and reference may be made to the embodiment of the first aspect for details, which shall not be described herein any further.

In addition, the above implementations only illustrate the embodiment of this disclosure. However, this disclosure is not limited thereto, and appropriate variants may be made on the basis of these implementations. For example, the above implementations may be executed separately, or one or more of them may be executed in a combined manner.

With the above embodiment, by transmitting the configuration of the NCD-SSB by the network device to the terminal equipment, the terminal equipment may perform measurement by using the NCD-SSB, and does not necessarily perform measurement by using a CD-SSB. Hence, unnecessary handover of the UE between different frequency points may be reduced, and transmission efficiency and energy saving may be improved.

### Embodiment of a third aspect

The embodiment of this disclosure provides a signal reception apparatus. The apparatus may be a terminal equipment, or one or some components or assemblies configured in the terminal equipment, with contents identical to those in the embodiment of first aspect being not going to be described herein any further.

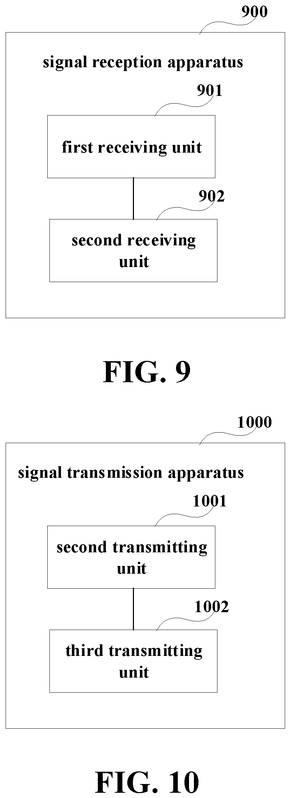

FIG. 9 is a schematic diagram of a signal reception apparatus of the embodiment of this disclosure, wherein a principle of implementation of the signal reception apparatus of the embodiment of this disclosure is similar to that of the embodiment of first aspect, and identical contents shall not be repeated herein any further.

As shown in FIG. 9, a signal reception apparatus 900 of the embodiment of this disclosure includes:
a first receiving unit 901 configured to receive configuration information of a non-cell defining synchronization signal and physical broadcast channel block (NCD-SSB) of a serving cell transmitted by a network device; and
a second receiving unit 902 configured to receive the NCD-SSB of the serving cell transmitted by the network device.

In some embodiments, the apparatus may further include:
a measuring unit 903 configured to perform measurement of the serving cell or beam measurement of the serving cell by using the NCD-SSB.

In some embodiments, the configuration information of the NCD-SSB includes an absolute frequency point of the NCD-SSB.

In some embodiments, the configuration information of the NCD-SSB further includes at least one piece of the following information: a period of the NCD-SSB, a subcarrier spacing of the NCD-SSB, transmit power of the NCD-SSB, time window configuration of the NCD-SSB, or an SSB index actually transmitted of the NCD-SSB in each half-frame.

In some embodiments, the period of the NCD-SSB of the serving cell is identical to a period of a CD-SSB of the serving cell; and/or, the subcarrier spacing of the NCD-SSB of the serving cell is identical to a subcarrier spacing of the CD-SSB of the serving cell; and/or, the transmit power of the NCD-SSB of the serving cell is identical to transmit power of the CD-SSB of the serving cell; and/or, the transmission time window of the NCD-SSB of the serving cell is identical to a transmission time window of the CD-SSB of the serving cell; and/or, the SSB index actually transmitted in each half-frame of the NCD-SSB of the serving cell is identical to an SSB index actually transmitted in each half-frame of the CD-SSB of the serving cell; and/or, an NCD-SSB beam of the serving cell is in a quasi-colocated (QCL) relationship with a CD-SSB beam with an index identical thereto of the serving cell.

In some embodiments, the apparatus further includes:
a determining unit (optional, not shown) configured to determine the following configuration information of the NCD-SSB according to configuration information of the CD-SSB of the serving cell:
the period of the NCD-SSB, the subcarrier spacing of the NCD-SSB, the transmit power of the NCD-SSB, a time window position of the NCD-SSB, the SSB index of the NCD-SSB actually transmitted in each half-frame.

In some embodiments, the configuration information of the NCD-SSB is carried by an RRC reconfiguration message.

In some embodiments, configuration of the NCD-SSB is configuration for the serving cell.

In some embodiments, the configuration information of the NCD-SSB is included in cell-specific configuration of a PCell in the RRC reconfiguration message, or in cell-common configuration or cell-specific configuration of a secondary cell (SCell) or a primary secondary cell (PSCell).

In some embodiments, the frequency range of the NCD-SSB is included or not included in a current active downlink BWP of the terminal equipment.

In some embodiments, configuration of the NCD-SSB is configuration for a specific bandwidth part (BWP) of the serving cell.

In some embodiments, the configuration information of the NCD-SSB is included in dedicated configuration of an initial downlink BWP or dedicated configuration or common configuration of a dedicated downlink BWP in cell-specific configuration of the PCell in the RRC reconfiguration message, or included in an initial downlink BWP in the cell-common configuration or cell-specific configuration of the SCell/PSCell, or included in common configuration or dedicated configuration of a dedicated downlink BWP in cell-specific configuration of the SCell/PSCell.

In some embodiments, the frequency range of the NCD-SSB is included in the current active downlink BWP of the terminal equipment.

In some embodiments, the configuration information of the NCD-SSB is carried by system information of the serving cell.

In some embodiments, configuration of the NCD-SSB is configuration for the serving cell.

In some embodiments, the configuration information of the NCD-SSB is included in SIB1, or the configuration information of the NCD-SSB is included in cell-common configuration contained in SIB1.

In some embodiments, the frequency range of the NCD-SSB is included in a second initial downlink BWP of the serving cell, wherein the second initial downlink BWP of the serving cell does not include a CD -SSB.

In some embodiments, configuration of the NCD-SSB is configuration for a dedicated bandwidth part (BWP) of the serving cell.

In some embodiments, the configuration information of the NCD-SSB is included in common configuration of a first initial downlink BWP or common configuration of a second initial downlink BWP in cell-common configuration included in SIB1;
wherein the first initial downlink BWP is used for a normal or enhanced capability terminal equipment, and the second initial downlink BWP is used for a reduced capability terminal equipment.

In some embodiments, the frequency range of the NCD-SSB is included in the second initial downlink BWP of the serving cell, wherein the second initial downlink BWP does not include a CD-SSB.

In some embodiments, the measuring unit 903 of the terminal equipment in the connected state performs measurement for at least one of the following purposes by using the NCD-SSB:
radio resource management (RRM);
physical random access channel (PRACH) occasion selection;
radio link monitoring (RLM); or
beam failure detection (BFD) or beam failure recovery (BFR).

In some embodiments, when the frequency range of the NCD-SSB is included in the current active downlink BWP, or when the period of the NCD-SSB is less than a preset period, the measuring unit 903 of the terminal equipment in the connected state performs measurement in the connected state based on the NCD-SSB.

In some embodiments, the apparatus further includes:
a first transmitting unit (optional, not shown) configured to transmit to the network device capability indication information indicating that the NCD-S SB is needed for use in performing measurement.

In some embodiments, the measuring unit 903 of the terminal equipment in an idle or inactive state performs measurement on the serving cell in a cell reselection procedure by using the NCD-SSB.

In some embodiments, when at least one of the following conditions is satisfied, the measuring unit 903 of the terminal equipment in the idle/inactive state performs measurement based on the NCD-SSB:
that the frequency range of the NCD-SSB is included in the initial downlink BWP;
that the initial downlink BWP contains common search space (CSS) configuration for paging;
that the system information block contains configuration information for cell reselection based on the NCD-SSB; or
that the period of the NCD-SSB is less than the preset period.

In some embodiments, the configuration information of the NCD-SSB is carried by a handover command RRC reconfiguration message.

In some embodiments, the common configuration of the serving cell after the terminal equipment is handed over included in the handover command RRC reconfiguration message includes the configuration information of the NCD-SSB.

In some embodiments, the apparatus further includes:
a third receiving unit (optional, not shown) configured to receive common configuration of the second initial downlink BWP of the serving cell after the handover via the handover command RRC reconfiguration message.

In some embodiments, the apparatus further includes:
a fourth receiving unit (optional, not shown) configured to receive an SIB 1 message of the serving cell after the handover via the handover command RRC reconfiguration message.

In some embodiments, when the frequency range of the NCD-SSB is included in the active downlink BWP of the terminal equipment after handover, the measuring unit 903 performs measurement in the connected state based on the NCD-SSB after being handed over to the serving cell.

In some embodiments, the apparatus further includes:
a fifth receiving unit (optional, not shown) configured to receive first indication information transmitted by the network device, the first indication information being used to indicate that the terminal equipment in the connected state performs measurement in the connected state based on an NCD-SSB or based on a CD-SSB.

In some embodiments, the first indication information is included in measurement configuration transmitted by the network device.

It should be noted that the components or modules related to this disclosure are only described above. However, this disclosure is not limited thereto, and the signal reception apparatus 900 of the embodiment of this disclosure may further include other components or modules, and reference may be made to related techniques for particulars of these components or modules.

Furthermore, for the sake of simplicity, connection relationships between the components or modules or signal profiles thereof are only illustrated in FIG. 9. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

With the above embodiment, by transmitting the configuration of the NCD-SSB by the network device to the terminal equipment, the terminal equipment may perform measurement by using the NCD-SSB, and does not necessarily perform measurement by using a CD-SSB. Hence, unnecessary handover of the UE between different frequency points may be reduced, and transmission efficiency and energy saving may be improved.

### Embodiment of a fourth aspect

The embodiment of this disclosure provides a signal transmission apparatus. The apparatus may be a network device, or one or some components or assemblies configured in the network device, with contents identical to those in the embodiment of second aspect being not going to be described herein any further.

FIG. 10 is a schematic diagram of a signal transmission apparatus of the embodiment of this disclosure, wherein a principle of implementation of the signal transmission apparatus of the embodiment of this disclosure is similar to that of the embodiment of second aspect, and identical contents shall not be repeated herein any further.

As shown in FIG. 10, a signal transmission apparatus 1000 of the embodiment of this disclosure includes:
a second transmitting unit 1001 configured to transmit to a terminal equipment configuration information of an NCD-SSB of a serving cell; and
a third transmitting unit 1002 configured to transmit the NCD-SSB of the serving cell to the terminal equipment.

In some embodiments, reference may be made to the embodiment of the first aspect for contents of the configuration information of the NCD-SSB, the configuration information of the NCD-SSB may be carried by specific RRC signaling, or may be carried by system information, or may be carried by a handover command, and reference may be made to the embodiment of the first aspect for details, which shall not be described herein any further.

In some embodiments, the apparatus further includes:
a sixth receiving unit (optional, not shown) configured to receive capability indication information indicating that the NCD-SSB is needed for use in performing measurement transmitted by the terminal equipment or other network devices.

In some embodiments, when an initial downlink BWP or dedicated downlink BWP of the serving cell does not include a CD-SSB, the second transmitting unit transmits the configuration information of the NCD-SSB of the serving cell, and the frequency range of the NCD-SSB is configured in the initial downlink BWP or dedicated downlink BWP of the serving cell.

In some embodiments, when the second initial downlink BWP includes common search space configuration for paging and does not include a CD-SSB, the second transmitting unit transmits the configuration information of the NCD-SSB of the serving cell, and the frequency range of the NCD-S SB is configured in the second initial downlink BWP of the serving cell.

In some embodiments, when a BWP of the terminal equipment after being handed over to the serving cell does not include a CD-SSB, the second transmitting unit transmits the configuration information of the NCD-SSB of the serving cell after handover, and the frequency range of the NCD-SSB is configured in an active BWP of the terminal equipment after being handed over to the serving cell.

In some embodiments, the apparatus may further include:
a fourth transmitting unit (optional, not shown) configured to transmit first indication information to the terminal equipment, the first indication information being used to indicate that the terminal equipment in the connected state performs measurement in the connected state based on an NCD-SSB or based on a CD-SSB, and the first indication information being included in the measurement configuration.

It should be noted that the components or modules related to this disclosure are only described above. However, this disclosure is not limited thereto, and the signal transmission apparatus 1000 of the embodiment of this disclosure may further include other components or modules, and reference may be made to related techniques for particulars of these components or modules.

Furthermore, for the sake of simplicity, connection relationships between the components or modules or signal profiles thereof are only illustrated in FIG. 10. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

With the above embodiment, by transmitting the configuration of the NCD-SSB by the network device to the terminal equipment, the terminal equipment may perform measurement by using the NCD-SSB, and does not necessarily perform measurement by using a CD-SSB. Hence, unnecessary handover of the UE between different frequency points may be reduced, and transmission efficiency and energy saving may be improved.

### Embodiment of a fifth aspect

The embodiment of this disclosure provides a communication system, and reference may be made to FIG. 1, with contents identical to those in the embodiments of the first to the fourth aspects being not going to be described herein any further.

In some embodiments, the communication system may include a terminal equipment 1100.

In some embodiments, the communication system may include a network device 1200.

The embodiment of this disclosure further provides a terminal equipment; however, this disclosure is not limited thereto, and it may also be another equipment.

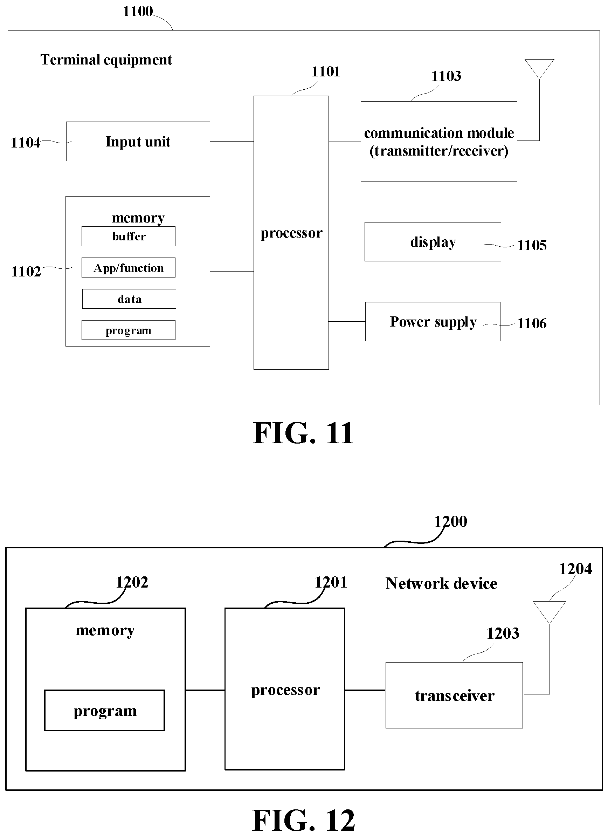

FIG. 11 is a schematic diagram of a terminal equipment of the embodiment of this disclosure. As shown in FIG. 11, a terminal equipment 1100 may include a processor 1101 and a memory 1102, the memory 1102 storing data and a program and being coupled to the processor 1101. It should be noted that this figure is illustrative only, and other types of structures may also be used, so as to supplement or replace this structure and achieve a telecommunications function or other functions.

For example, the processor 1101 may be configured to execute a program to carry out the method executed by the terminal equipment as described in the embodiment of the first aspect.

As shown in FIG. 11, the terminal equipment 1100 may further include a communication module 1103, an input unit 1104, a display 1105, and a power supply 1106, wherein functions of the above components are similar to those in the related art, which shall not be described herein any further. It should be noted that the terminal equipment 1100 does not necessarily include all the parts shown in FIG. 11, and the above components are not necessary. Furthermore, the terminal equipment 1100 may include parts not shown in FIG. 11, and the related art may be referred to.

The embodiment of this disclosure further provides a network device, which may be, for example, a base station. However, this disclosure is not limited thereto, and it may also be another network device.

FIG. 12 is a schematic diagram of a network device of the embodiment of this disclosure. As shown in FIG. 12, a network device 1200 may include a processor 1201 (such as a central processing unit (CPU)) and a memory 1202, the memory 1202 being coupled to the processor 1201. The memory 1202 may store various data, and furthermore, it may store a program for information processing, and execute the program under control of the processor 1201.

For example, the processor 1201 may be configured to execute a program to carry out the method described in the embodiment of the second aspect.

Furthermore, as shown in FIG. 12, the network device 1200 may include a transceiver 1203, and an antenna 1204, etc. Functions of the above components are similar to those in the related art, and shall not be described herein any further. It should be noted that the network device 1200 does not necessarily include all the parts shown in FIG. 12, and furthermore, the network device 1200 may include parts not shown in FIG. 12, and the related art may be referred to.

An embodiment of this disclosure provides a computer readable program, which, when executed in a terminal equipment, causes a computer to carry out the method as described in the embodiment of the first aspect in the terminal equipment.

An embodiment of this disclosure provides a computer storage medium, including a computer readable program, which causes a computer to carry out the method as described in the embodiment of the first aspect in a terminal equipment.

An embodiment of this disclosure provides a computer readable program, which, when executed in a network device, causes a computer to carry out the method as described in the embodiment of the second aspect in the network device.

An embodiment of this disclosure provides a computer storage medium, including a computer readable program, which causes a computer to carry out the method as described in the embodiment of the second aspect in a network device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.
1. A signal reception method, applicable to a terminal equipment side, characterized in that the method includes:
   receiving, by a terminal equipment, configuration information of a non-cell defining synchronization signal and physical broadcast channel block (NCD-SSB) of a serving cell transmitted by a network device; and
   receiving, by the terminal equipment, the NCD-SSB of the serving cell transmitted by the network device.
2. The method according to supplement 1, wherein the method further includes:
   performing measurement of the serving cell or beam measurement of the serving cell by the terminal equipment by using the NCD-SSB.
3. The method according to supplement 1 or 2, wherein the configuration information of the NCD-SSB includes an absolute frequency point of the NCD-SSB.
4. The method according to supplement 3, wherein the configuration information of the NCD-SSB further includes at least one piece of the following information: a period of the NCD-SSB, a subcarrier spacing of the NCD-SSB, transmit power of the NCD-SSB, time window configuration of the NCD-SSB, or an SSB index of the NCD-SSB actually transmitted in each half-frame.
5. The method according to supplement 4, wherein the period of the NCD-SSB of the serving cell is identical to a period of a CD-SSB of the serving cell; and/or,
   the subcarrier spacing of the NCD-SSB of the serving cell is identical to a subcarrier spacing of the CD-SSB of the serving cell; and/or,
   the transmit power of the NCD-SSB of the serving cell is identical to transmit power of the CD-SSB of the serving cell; and/or,
   a transmission time window of the NCD-SSB of the serving cell is identical to a transmission time window of the CD-SSB of the serving cell; and/or,
   the SSB index actually transmitted in each half-frame of the NCD-SSB of the serving cell is identical to an SSB index actually transmitted in each half-frame of the CD-SSB of the serving cell; and/or,
   an NCD-SSB beam of the serving cell is in a quasi-colocated (QCL) relationship with a CD-SSB beam with an index identical thereto of the serving cell.
6. The method according to supplement 5, wherein the terminal equipment determines the following configuration information of the NCD-SSB according to configuration information of the CD-SSB of the serving cell:
   the period of the NCD-SSB, the subcarrier spacing of the NCD-SSB, the transmit power of the NCD-SSB, a time window position of the NCD-SSB, and the SSB index of the NCD-SSB actually transmitted in each half-frame.
7. The method according to any one of supplements 1-6, wherein the configuration information of the NCD-SSB is carried by an RRC reconfiguration message.
8. The method according to supplement 7, wherein configuration of the NCD-SSB is configuration for the serving cell.
9. The method according to supplement 8, wherein the configuration information of the NCD-SSB is included in cell-specific configuration of a PCELL in the RRC reconfiguration message, or included in cell-common configuration or cell-specific configuration of a secondary cell (SCELL) or a primary secondary cell (PSCELL).
10. The method according to supplement 8, wherein a frequency range of the NCD-SSB is included or not included in a current active downlink BWP of the terminal equipment.
11. The method according to supplement 7, wherein configuration of the NCD-SSB is configuration for a specific bandwidth part (BWP) of the serving cell.
12. The method according to supplement 11, wherein the configuration information of the NCD-SSB is included in dedicated configuration of an initial downlink BWP or dedicated configuration or common configuration of dedicated downlink BWP, in cell-specific configuration of a PCELL in the RRC reconfiguration message, or is included in initial downlink BWP configuration in cell-common configuration or cell-specific configuration of SCELL/PSCELL, or is included in common configuration or dedicated configuration of a dedicated downlink BWP in cell-specific configuration of SCELL/PSCELL.
13. The method according to supplement 11, wherein the frequency range of the NCD-SSB is included in the current active downlink BWP of the terminal equipment.
14. The method according to any one of supplements 1-6, wherein the configuration information of the NCD-SSB is carried by system information of the serving cell.
15. The method according to supplement 14, wherein configuration of the NCD-SSB is configuration for the serving cell.
16. The method according to supplement 15, wherein the configuration information of the NCD-SSB is included in SIB 1, or the configuration information of the NCD-SSB is included in cell-common configuration contained in SIB 1.
17. The method according to supplement 15, wherein the frequency range of the NCD-SSB is included or not included in a second initial downlink BWP of the serving cell, wherein the second initial downlink BWP does not include a CD -SSB.
18. The method according to supplement 14, wherein configuration of the NCD-SSB is configuration for a specific bandwidth part (BWP) of the serving cell.
19. The method according to supplement 18, wherein the configuration information of the NCD-SSB is included in common configuration of a first initial downlink BWP or common configuration of a second initial downlink BWP in cell-common configuration included in SIB1,
   wherein the first initial downlink BWP is used for a normal or capability-enhanced terminal equipment, and the second initial downlink BWP is used for a capability-reduced terminal equipment.
20. The method according to supplement 18, wherein the frequency range of the NCD-SSB is included in the second initial downlink BWP of the serving cell, wherein the second initial downlink BWP does not include a CD-SSB.
21. The method according to any one of supplements 7-20, wherein the terminal equipment in a connected state performs measurement for at least one of the following purposes by using the NCD-SSB:
   radio resource management (RRM);
   physical random access channel (PRACH) occasion selection;
   radio link monitoring (RLM); or
   beam failure detection (BFD) or beam failure recovery (BFR).
22. The method according to any one of supplements 7-20, wherein when the frequency range of the NCD-SSB is included in the current active downlink BWP, or when the period of the NCD-SSB is less than a preset period, the terminal equipment in the connected state performs measurement in the connected state based on the NCD-SSB.
23. The method according to any one of supplements 7-20, wherein the method further includes:
   transmitting, by the terminal equipment to the network device, capability indication information indicating that the NCD-SSB is needed for use in performing measurement.
24. The method according to any one of supplements 14-20, wherein the terminal equipment in an idle or inactive state measures the serving cell in a cell reselection procedure by using the NCD-SSB.
25. The method according to any one of supplements 14-20, wherein when at least one of the following conditions is satisfied, the terminal equipment in the idle/inactive state performs measurement based on the NCD-SSB:
   that the frequency range of the NCD-SSB is included in the initial downlink BWP;
   that the initial downlink BWP contains common search space (CSS) configuration for paging;
   that the system information block contains configuration information for cell reselection based on the NCD-SSB; or
   that the period of the NCD-SSB is less than the preset period.
26. The method according to any one of supplements 1-6, wherein the configuration information of the NCD-SSB is carried by a handover command RRC reconfiguration message.
27. The method according to supplement 26, wherein the NCD-SSB configuration information is included in common configuration of the serving cell after handover of the terminal equipment included in the handover command RRC reconfiguration message.
28. The method according to supplement 26, wherein the terminal equipment further receives, via the handover command RRC reconfiguration message, common configuration of the second initial downlink BWP of the serving cell after the handover.
29. The method according to any one of supplements 26-28, wherein the terminal equipment further receives, via the handover command RRC reconfiguration message, an SIB 1 message of the serving cell after the handover.
30. The method according to any one of supplements 26-28, wherein when the frequency range of the NCD-SSB is included in the active downlink BWP of the terminal equipment after the handover, the terminal equipment performs measurement in the connected state based on the NCD-SSB after being handed over to the serving cell.
31. The method according to any one of supplements 7-28, wherein the method further includes:
   receiving, by the terminal equipment, first indication information transmitted by the network device, the first indication information being used to indicate that the terminal equipment in the connected state performs measurement in the connected state based on an NCD-SSB or based on a CD-SSB.
32. The method according to supplement 31, wherein the first indication information is included in measurement configuration transmitted by the network device.
33. A signal reception method, applicable to a network device side, characterized in that the method includes:
   transmitting, by the network device, to a terminal equipment configuration information of an NCD-SSB of a serving cell; and
   transmitting the NCD-SSB of the serving cell by the network device to the terminal equipment.
34. The method according to supplement 33, wherein the configuration information of the NCD-SSB includes an absolute frequency point of the NCD-SSB.
35. The method according to supplement 34, wherein the configuration information of the NCD-SSB further includes at least one piece of the following information: a period of the NCD-SSB, a subcarrier spacing of the NCD-SSB, transmit power of the NCD-SSB, time window configuration of the NCD-SSB, or an SSB index of the NCD-SSB actually transmitted in each half-frame.
36. The method according to supplement 33, wherein the method further includes:
   receiving, by the network device, capability indication information indicating that the NCD-SSB is needed for use in performing measurement transmitted by the terminal equipment or other network devices.
37. The method according to any one of supplements 33-36, wherein when an initial downlink BWP or dedicated downlink BWP of the serving cell does not include a CD-SSB, the network device transmits the configuration information of the NCD-SSB of the serving cell, and the network device configures the frequency range of the NCD-SSB in the initial downlink BWP or dedicated downlink BWP of the serving cell.
38. The method according to any one of supplements 33-35, wherein when the second initial downlink BWP includes common search space configuration for paging and does not include a CD-SSB, the network device transmits the configuration information of the NCD-SSB of the serving cell, and configures the frequency range of the NCD-SSB in the second initial downlink BWP of the serving cell.
39. The method according to any one of supplements 33-36, wherein when an active BWP of the terminal equipment after being handed over to the serving cell does not include a CD-SSB, the network device transmits the configuration information of the NCD-SSB of the serving cell after handover, and the network device configures the frequency range of the NCD-SSB in the active BWP of the terminal equipment after being handed over to the serving cell.
40. The method according to any one of supplements 33-37, wherein the configuration information of the NCD-SSB is carried by an RRC reconfiguration message.
41. The method according to supplement 40, wherein configuration of the NCD-SSB is configuration for the serving cell.
42. The method according to supplement 41, wherein the configuration information of the NCD-SSB is included in cell-specific configuration of a PCELL in the RRC reconfiguration message, or included in cell-common configuration or cell-specific configuration of a secondary cell (SCELL) or a primary secondary cell (PSCELL).
43. The method according to supplement 41, wherein a frequency range of the NCD-SSB is included or not included in a current active downlink BWP of the terminal equipment.
44. The method according to supplement 40, wherein configuration of the NCD-SSB is configuration for a dedicated bandwidth part (BWP) of the serving cell.
45. The method according to supplement 44, wherein the configuration information of the NCD-SSB is included in dedicated configuration of an initial downlink BWP or dedicated configuration or common configuration of dedicated downlink BWP, in cell-specific configuration of a PCELL in the RRC reconfiguration message, or is included in initial downlink BWP configuration in cell-common configuration or cell-specific configuration of SCELL/PSCELL, or is included in common configuration or dedicated configuration of a dedicated downlink BWP in cell-specific configuration of SCELL/PSCELL.
46. The method according to supplement 44, wherein the frequency range of the NCD-SSB is included in the current active downlink BWP of the terminal equipment.
47. The method according to any one of supplements 33-38, wherein the configuration information of the NCD-SSB is carried by system information of the serving cell.
48. The method according to supplement 14, wherein configuration of the NCD-SSB is configuration for the serving cell.
49. The method according to supplement 48, wherein the configuration information of the NCD-SSB is included in SIB 1, or the configuration information of the NCD-SSB is included in cell-common configuration contained in SIB1.
50. The method according to supplement 48, wherein the frequency range of the NCD-SSB is included or not included in a second initial downlink BWP of the serving cell, wherein the second initial downlink BWP does not include a CD -SSB.
51. The method according to supplement 47, wherein configuration of the NCD-SSB is configuration for a specific bandwidth part (BWP) of the serving cell.
52. The method according to supplement 51, wherein the configuration information of the NCD-SSB is included in common configuration of a first initial downlink BWP or common configuration of a second initial downlink BWP in cell-common configuration included in SIB1,
   wherein the first initial downlink BWP is used for a normal or capability-enhanced terminal equipment, and the second initial downlink BWP is used for a capability-reduced terminal equipment.
53. The method according to supplement 51, wherein the frequency range of the NCD-SSB is included in the second initial downlink BWP of the serving cell, wherein the second initial downlink BWP does not include a CD-SSB.
54. The method according to any one of supplements 33-36 or 39, wherein the configuration information of the NCD-SSB is carried by a handover command RRC reconfiguration message.
55. The method according to supplement 54, wherein the NCD-SSB configuration information is included in common configuration of the serving cell after handover of the terminal equipment included in the handover command RRC reconfiguration message.
56. The method according to supplement 55, wherein the network device further transmits common configuration of the second initial downlink BWP of the serving cell after the handover via the handover command RRC reconfiguration message.
57. The method according to any one of supplements 54-56, wherein the network device further transmits an SIB 1 message of the serving cell after the handover via the handover command RRC reconfiguration message.
58. The method according to any one of supplements 34-57, wherein the method further includes:
   transmitting first indication information by the network device to the terminal equipment, the first indication information being used to indicate that the terminal equipment in the connected state performs measurement in the connected state based on an NCD-SSB or based on a CD-SSB.
59. The method according to supplement 58, wherein the first indication information is included in measurement configuration transmitted by the network device.
60. A network device, including a memory and a processor, the memory storing a computer program, and the processor being configured to execute the computer program to carry out the method as described in any one of supplements 33-59.
61. A terminal equipment, including a memory and a processor, the memory storing a computer program, and the processor being configured to execute the computer program to carry out the method as described in any one of supplements 1-32.
62. A communication system, including a network device and a terminal equipment, wherein the network device is configured to execute the method as described in any one of supplements 33-59, and the terminal equipment is configured to execute the method as described in any one of supplements 1-32.

## Claims

1. A signal reception apparatus, applicable to a terminal equipment, **characterized in that** the apparatus comprises:
a first receiving unit configured to receive configuration information of a non-cell defining synchronization signal and physical broadcast channel block (NCD-SSB) of a serving cell transmitted by a network device, and
a second receiving unit configured to receive the NCD-SSB of the serving cell transmitted by the network device.

2. The apparatus according to claim 1, wherein the apparatus further comprises:
a measuring unit configured to perform measurement of the serving cell or beam measurement of the serving cell by using the NCD-SSB.

3. The apparatus according to claim 1 or 2, wherein the configuration information of the NCD-SSB comprises an absolute frequency point of the NCD-SSB.

4. The apparatus according to claim 3, wherein the configuration information of the NCD-SSB further includes at least one piece of the following information: a period of the NCD-SSB, a subcarrier spacing of the NCD-SSB, transmit power of the NCD-SSB, time window configuration of the NCD-SSB, or an SSB index actually transmitted by the NCD-SSB in each half-frame.

5. The apparatus according to claim 4, wherein the period of the NCD-SSB of the serving cell is identical to a period of a CD-SSB of the serving cell; and/or,
the subcarrier spacing of the NCD-SSB of the serving cell is identical to a subcarrier spacing of a CD-SSB of the serving cell; and/or,
the transmit power of the NCD-SSB of the serving cell is identical to transmit power of a CD-SSB of the serving cell; and/or,
a transmission time window of the NCD-SSB of the serving cell is identical to a transmission time window of a CD-SSB of the serving cell; and/or,
the SSB index actually transmitted in each half-frame of the NCD-SSB of the serving cell is identical to an SSB index actually transmitted in each half-frame of a CD-SSB of the serving cell; and/or,
an NCD-SSB beam of the serving cell is in a quasi-colocated (QCL) relationship with a CD-SSB beam with an index identical thereto of the serving cell.

6. The apparatus according to claim 5, wherein the apparatus further comprises:
a determining unit configured to determine the following configuration information of the NCD-SSB according to configuration information of the CD-SSB of the serving cell:
the period of the NCD-SSB, the subcarrier spacing of the NCD-SSB, the transmit power of the NCD-SSB, a time window position of the NCD-SSB, and the SSB index of the NCD-SSB actually transmitted in each half-frame.

7. The apparatus according to claim 1, wherein the configuration information of the NCD-SSB is carried by an RRC reconfiguration message.

8. The apparatus according to claim 7, wherein configuration of the NCD-SSB is configuration for the serving cell.

9. The apparatus according to claim 7, wherein configuration of the NCD-SSB is configuration for a specific bandwidth part (BWP) of the serving cell.

10. The apparatus according to claim 1, wherein the configuration information of the NCD-SSB is carried by system information of the serving cell.

11. The apparatus according to claim 10, wherein configuration of the NCD-SSB is configuration for the serving cell.

12. The apparatus according to claim 11, wherein the configuration information of the NCD-SSB is included in SIB1, or the configuration information of the NCD-SSB is included in cell-common configuration contained in SIB1.

13. The apparatus according to claim 11, wherein a frequency range of the NCD-SSB is included or not included in a second initial downlink BWP of the serving cell, wherein the second initial downlink BWP does not include a CD -SSB.

14. The apparatus according to claim 10, wherein configuration of the NCD-SSB is configuration for a specific bandwidth part (BWP) of the serving cell.

15. The apparatus according to claim 14, wherein a frequency range of the NCD-SSB is included in a second initial downlink BWP of the serving cell, wherein the second initial downlink BWP does not include a CD -SSB.

16. The apparatus according to claim 7 or 10, wherein when a frequency range of the NCD-SSB is included in a current active downlink BWP, or when a period of the NCD-SSB is less than a preset period, a measuring unit of the terminal equipment in the connected state performs measurement in the connected state based on the NCD-SSB.

17. The apparatus according to claim 10, wherein when at least one of the following conditions is satisfied, a measuring unit of the terminal equipment in the idle/inactive state performs measurement based on the NCD-SSB:
that a frequency range of the NCD-SSB is included in an initial downlink BWP;
that the initial downlink BWP contains common search space (CSS) configuration for paging;
that a system information block contains configuration information for cell reselection based on the NCD-SSB; or
that a period of the NCD-SSB is less than a preset period.

18. The apparatus according to claim 1, wherein the configuration information of the NCD-SSB is carried by a handover command RRC reconfiguration message.

19. The apparatus according to claim 7 or 10 or 18, wherein the apparatus further comprises:
a fifth receiving unit configured to receive first indication information transmitted by the network device, the first indication information being used to indicate that the terminal equipment in the connected state performs measurement in the connected state based on the NCD-SSB or based on a CD-SSB;
or,
a fifth receiving unit configured to receive first indication information transmitted by the network device, the first indication information being used to indicate that the terminal equipment in the connected state performs measurement in the connected state based on the NCD-SSB or based on a CD-SSB, wherein the first indication information is contained in measurement configuration transmitted by the network device.

20. A signal transmission apparatus, applicable to a network device, **characterized in that** the apparatus comprises:
a second transmitting unit configured to transmit to a terminal equipment configuration information of an NCD-SSB of a serving cell, and
a third transmitting unit configured to transmit the NCD-SSB of the serving cell to the terminal equipment.
